(19) Europäisches Patentamt
European Patent Office
Office européen des brevets

(11) **EP 3 835 765 B1**

(12) **EUROPEAN PATENT SPECIFICATION**

(45) Date of publication and mention of the grant of the patent:
**16.03.2022 Bulletin 2022/11**

(21) Application number: **20210349.5**

(22) Date of filing: **17.06.2019**

(51) International Patent Classification (IPC):
**G01N 21/77** (2006.01)    G02B 6/28 (2006.01)

(52) Cooperative Patent Classification (CPC):
**G01N 21/7703;** G01N 21/7746; G01N 2021/7779;
G02B 6/2808

(54) **INTERFEROMETRIC FIBER OPTIC SENSOR, FIBER OPTIC PROBE AND METHOD OF DETECTION OF A CHEMICAL SUBSTANCE**

INTERFEROMETRISCHER FASEROPTISCHER SENSOR, FASEROPTISCHE SONDE UND VERFAHREN ZUM NACHWEIS EINER CHEMISCHEN SUBSTANZ

CAPTEUR INTERFÉROMÉTRIQUE À FIBRE OPTIQUE, SONDE À FIBRE OPTIQUE ET PROCÉDÉ DE DÉTECTION D'UNE SUBSTANCE CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2019 PL 42497219**

(43) Date of publication of application:
**16.06.2021 Bulletin 2021/24**

(62) Document number(s) of the earlier application(s) in accordance with Art. 76 EPC:
**19752255.0 / 3 797 283**

(73) Proprietor: **Inphotech Spolka z Ograniczona Odpowiedzialnoscia**
**05-850 Oltarzew (PL)**

(72) Inventors:
• **BUDNICKI, Dawid**
**09-540 Sanniki (PL)**
• **MAKARA, Mariusz**
**29-576 Lublin (PL)**
• **NAPIERALA, Marek**
**01-476 Warszawa (PL)**
• **NASILOWSKI, Tomasz**
**00-172 Warsaw (PL)**
• **POTURAJ, Krzysztof**
**20-554 Lublin (PL)**
• **SZOSTKIEWICZ, Lukasz**
**87-100 Torun (PL)**
• **WILCZYNSKI, Krzysztof**
**11-600 Wegorzewo (PL)**
• **WYSOKINSKI, Karol**
**81-589 Gdynia (PL)**

(74) Representative: **Bury & Bury**
**Ul. Przyczolkowa 124**
**02-968 Warszawa (PL)**

(56) References cited:
WO-A1-2013/139783      WO-A1-2018/106134
WO-A2-2016/043850      CN-A- 105 181 112
US-A1- 2013 294 975

• **YU FEN ET AL: "Envelope-based demodulation for temperature sensing with cascaded fiber Fabry-Perot interferometers", 2017 16TH INTERNATIONAL CONFERENCE ON OPTICAL COMMUNICATIONS AND NETWORKS (ICOCN), IEEE, 7 August 2017 (2017-08-07), pages 1-3, XP033270205, DOI: 10.1109/ICOCN.2017.8121442 ISBN: 978-1-5386-3271-0 [retrieved on 2017-11-27]**

**Description**

The invention concerns an interferometric fiber optic sensor, a fiber optic probe and a method of detection of a chemical substance using the interferometric fiber optic sensor with the fiber optic probe.

Interferometric fiber optic sensors for measurement parameters such as temperature, strain or detection of substances are known in the art.

Publication WO2018106134 of international patent application discloses an interferometric fiber optic sensor including a Michelson interferometer with one arm covered with an active substance adapted to interact with a substance to be detected. A result of this interaction is a change of thickness or optical thickness of the active substance, refractive index or attenuation at the end of the measurement arm. Such an interferometric fiber optic sensor can be used to detect the presence of a substance in the environment surrounding the measurement arm. Particularly the measurement arm can be immersed in the unknown substance to detect if this substance includes a predefined substance or substances. An active substance can be selected so that it reacts with only one substance to be detected or a group of substances to be detected. A method of detection consists in observation of interference fringes before contact with the environment or an unknown substance and after contact with the environment or an unknown substance. Presence of a predefined substance is detected if a particular shift of interference fringes is detected.

In the state of the art there are known also other configurations of interferometric sensors. Fabry-Perot interferometer is one of the so called multibeam interferometers and is used for examination of light waves and utilizes a phenomenon of multiple reflection of light beam between two parallel and partially transparent mirrors.

An example of such construction is fuel level sensor disclosed in description of EP 3054272 may act as an example, in which an optical cavity is made on the optical fiber with a semiconductor material, e.g. gallium arsenide. An optical cavity is attached to a lower surface of a diaphragm and the change of dimensions resulting from the changes of pressure of diaphragm on the cavity make possible interpretation of the result as a state of fuel reserve.

US patent application no US2005254062 discloses interferometric sensor and method for detecting the presence or amount or rate of binding of an analyte. Sensor works in Fabry-Perrot configuration and has light source, detector with optical path between them comprising light dividing element and measuring element probe in which optical fiber delivers light to a first and second optical element, via air gap. Second optical element is covered with substance capable of binding analyte. Analyte is analyzed with observation of the spectrum of reflected light. Document discloses multiple applications allowing detection and measurements of particular substances - analytes, in particular antigens. The disclosure is not devoid of disadvantages. It requires high precision of manufacturing of the first and the second optical element and - particularly - precise definition of air gap. It is non-optional requirement for the probes to be repeatable and for the spectral changes to be properly observed. It comes at the cost of complicating mathematical model. Replacing of the probe is also a problem as well as manufacturing thereof. Publication WO2013139783 of international patent application discloses an interferometric fiber optic sensor for detecting chemical substances comprising a light source, a detector and an optical path arranged between the light source and the detector. It further comprises a light dividing element to which the detector and the light source are connected as well as an optical fiber segment, with a measuring element constituting a resonant cavity, having a face. The optical fiber segment and the measuring element are fused together by splicing so that there is a cavity between them. The optical fiber segment is at least partly contained in a capillary. A first end of the capillary is joined with the measuring element and the other end is spliced on the fiber segment.

Sensors known in the art are difficult in mass production, have parameters difficult to be repeated and are a bit cumbersome with small samples. On the other hand, industrial sensors like fluid level sensors give only limited information about certain condition that has been met. Consequently, there is a need for sensor that can be applied in large amounts of repeatable testing and examination. It is an object of the invention to provide interferometeric fiber optic sensor, fiber optic probe and method of using thereof devoid of the disadvantages of the state of the art mentioned above.

Fiber optic measuring probe for detecting chemical substances according to the invention comprises optical fiber segment, with a measuring element constituting resonant cavity, having a face adapted to come into contact with chemical substance to be detected. The optical fiber segment is at least along part of its length contained within a capillary. A first ending part of the capillary is joined with the measuring element while other portion of the capillary is clenched on the optical fiber segment. The capillary has length of at least 5 mm.

The optical fiber segment and the measuring element are squeezed together so that there is only a residual cavity between them, and a ratio between an optical length $a \cdot n_1$ of the residual cavity and an optical length $b \cdot n_2$ of the measuring element may be greater than 0 and lower than or equal to 0.4.

Length of capillary of 5 mm or greater enables shifting a point of clenching on the optical fibre segment away from the residual cavity far enough for its parameters not to be affected in the process. Probe according to the invention can be located remote from the light source and detector. It is easily replaceable. Can be easily sterilized and adapted to subsequent use.

Providing ratio between the length of resonant cavity and residual cavity within a range of 0 to 0.4 results in high frequency of interference fringes and simplifies analysis. This ratio makes it easier to use single cavity model in the analysis.

Measurement fringes are far narrower than the ones originating form residual cavity. Spectrum of the reflected signal from the residual cavity is far wider than the spectrum of measurement signal originating from cavity formed by measuring element. In mathematical model it corresponds to multiplication of two sinusoidal signals having different periods. Providing given ratio makes it easier to consider impact to the spectrum originating from the residual cavity constant and neglect it.

Advantageously, the measuring element has face at least partly covered with substance adhesive to the substance to be detected. This configuration makes it easy to capture the sample of the substance to be detected.

Alternatively, the measuring element has face at least partly covered with substance that loses its adhesiveness when exposed to the substance to be detected. In this configuration substance it is possible to detected result of exposition of the face of the measuring element to the predefined substance and consequently to detect the substance itself.

Alternatively, the measuring element has face at least partly covered with substance that changes its optical parameters when exposed to the substance to be detected. Application of covers with multiple substances interacting with respective particular substances to be detected makes it possible to detect multiple substances in single measurement with the same detector and light source. Attachment/detachment of the substance or change of parameters of the substance on the face of measuring element or change of the parameters of the element itself after exposition to the external factors changes length of the optical path in the interferometer. In result a shift of interference fringes can be observed.

Measuring element advantageously is a tile made of material comprising a substance selected of a group including glass, silica glass, lead glass, ZBLAN glass and polymers.

An end of the optical fiber segment inside the capillary is advantageously oblique and inclined by an angle within a range of 4° to 20° with respect to the axis of the optical fiber segment.

A first surface of the optical fiber segment confining the residual cavity from the first side has a reflection coefficient $R_1$ and a second surface of the measuring element confining the residual cavity from an opposite side has a reflection coefficient $R_2$ and the reflection co-

$$\frac{R_1}{R_2} \leq 0,5$$

efficients meet the condition .

Advantageously, when difference between refraction index of the medium within capillary $n_1$ and refraction index of material of measurement element $n_2$ is greater than 30% i.e.:

$$\frac{|n_2 - n_1|}{n_1} \geq 0,3$$

Fiber optic measuring probe advantageously has a connector provided on an end of the optical fiber segment, opposite that the measuring element is located.

Advantageously optical fiber segment in the measuring probe has more than one core. It enables use of the probe within an interferometer with multiple detectors and/or sources providing better sensitivity and specificity.

Interferometric fiber optic sensor according to the invention, for detecting chemical substances comprises a light source, a detector and an optical path arranged between the light source and the detector. It further comprises a light dividing element to which the detector and the light source are connected, as well as optical fiber measuring probe according to the invention. Positive result of such construction of the sensor is that residual cavity is neglected in calculations. It has low impact on the measurement results and is easy to manufacture in stable and repeatable manner. Consequently, sensor according to the invention can be considered as having a single measurement resonant cavity constituted by the surfaces of the faces of the measuring element. It results in linear measurement and simple interpretation of measurement results. Probe with a capillary can be easily replaced by cutting and welding a new one or using a fiber optic connectors. Sensor is applicable in particular but not only to detect substances within a group including acetone, refrigerants, ethanol vapours, hydrochloric acid, poly(allylamine hydrochloride), allylamines, proteins, biomarkers and antigens. Additional advantage of the invention is that substance to be detected interact with a face of measuring element being in front of the optical fiber. This configuration improves measurement dynamics in comparison to the probes in which substance to be detected interacts with side surface of the optical fiber or measuring element.

Advantageously optical fiber segment of the fiber optic measurement probe is a multicore fiber segment and is connected to fan-in/fan-out being in the optical path, wherein interferometer has a first light source and a first detector connected with fan-in/fan-out device via a first light dividing element and a second light source and a second detector connected with fan-in/fan-out device via a second light dividing element. This configuration makes it possible to simultaneously observe shifts on different wavelengths and improvement of sensitivity and specificity of detection or simultaneous detection of two different substances.

Advantageously the interferometer further has a third light source and a third detector connected with fan-in/fan-out device via a third light dividing element. Application of greater number of sources and detectors operating at various wavelengths further improves sensitivity and specificity yet is connected with high complication of the sensor.

Advantageously least one light source selected from a group including:

- supercontinuum source,

- halogen lamp emitting light within a wavelength range of 400-700 nm,

- superluminescent diode having a central wavelength of 1310 nm,

- superluminescent diode having a central wavelength of 1400 nm,

- superluminescent diode having a central wavelength of 1450 nm,

- superluminescent diode having a central wavelength of 1550 nm,

- narrowband light source having a central wavelength within a range 1310 do 1550 nm tunable within a range of 20 nm or wider.

Generally good results were obtained with sources working within a range of wavelength of $400 \div 1600$ nm. Having selected a source and mechanism of interaction of the face of measuring element with substance to be detected it is possible easily to select length of the measuring element to obtain fringe at desired wavelength corresponding to selected source so that shift of the fringe can be easily observed.

Method of detecting chemical substance according to the invention involves use of interferometric fiber optic sensor having optical path with detector, light source and fiber optic measuring probe included in the optical path, guiding light to substance to be detected. Substance is considered as detected if shift of predefined interference fringe is observed on detector.

According to the invention, in the method, there is used an interferometer according to the invention having a fiber optic measuring probe according to the invention.

As the measurement element constitutes resonant cavity it is possible to register interference fringes in the wavelength domain.

In case to the external surface of the cavity a substance is attached, or thickness of the substance already attached is increased interference fringes are shifted towards greater wavelength.

Size of the shift can be used to determine thickness change.

Alternatively, if layer is detached interference fringes move towards shorter wavelengths and reduction of thickness can be determined.

**Description of drawings**

Embodiments of the invention has been described below in detail, with reference to the following figures wherein Fig. 1a shows a block diagram of an interferometric fiber optic sensors according to a first, a second and a third embodiment of the invention, Fig. 1b shows schematically configuration of a probe according an embodiment of the invention, Fig. 1c shows schematically configuration of a probe according another embodiment of the invention, Fig. 2a and Fig. 2b show a shift of interferometric fringes due to exposition to substance under test in the first embodiment of the invention, Fig. 3 shows a block diagram of a sensor according to a fourth embodiment of the invention with multicore - three core - fiber, while Fig. 4 shows cross-sectional view of this three core fiber.

**Embodiments of the invention**

**Example 1**

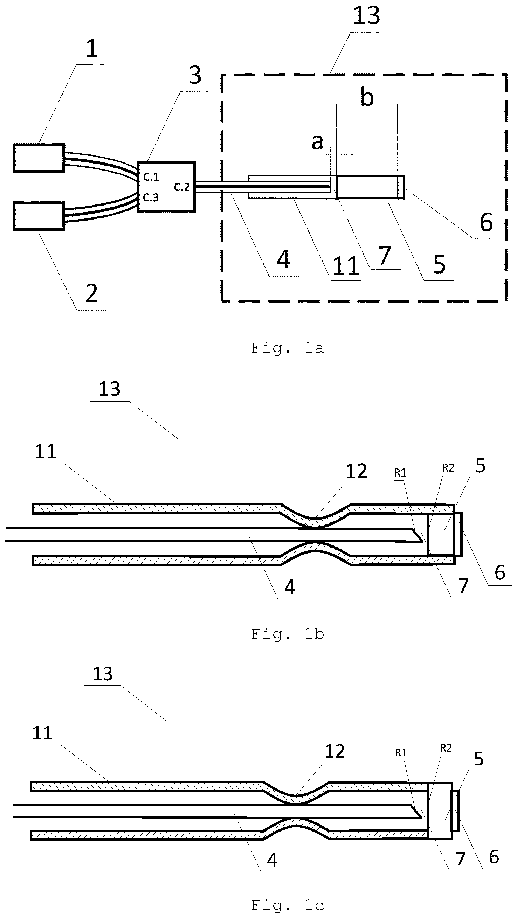

Block diagram of an interferometer in this embodiment is presented in fig. 1.a. Superluminescent diode with a central wavelength of 1400 nm and a full width at half maximum equal to 50 nm, constituting the light source 1 is connected through a single mode optical fiber to the first port C.1 of a circulator constituting a dividing element 3. A measuring probe 13 according to the invention is connected to the second circulator port C.2 with a single-mode fiber end 4. In the structure of the measuring probe 13, the other end of the optical fiber 4 is enclosed in a silica glass capillary 11 and pushed to the measuring element 5 attached to the capillary 11 by splicing.

Alternatively, the capillary can be clamped on the measuring element 5.

The end of the optical fiber 4 located in the capillary is cut at an angle $\alpha = 8°$. As a result, between the end of optical fiber 4 and the measuring element 5 there is an air gap forming a residual cavity 7 with an effective width from a = 0 $\mu$m to a = 2 $\mu$m. Measuring element 5 has a length of 20 $\mu$m.

Further tests have shown that effect of attenuation of reflected signals can be obtained to some extent in whole range of cutting angles from 4° to 20°.

To the third port C.3 of a circulator there is connected an optical spectrum analyzer used in this embodiment of the invention as a detector 2.

Light from source 1, through a circulator constituting a dividing element 3 gets to the optical fiber 4, where through an air gap of a width "a" it gets to the measuring element 5 having the face 6. This way a Fabry-Perot interferometer is obtained. On the detector 2 one can observe interference fringes in the spectral domain. A shift of fringes and/or contrast depend on changes of the parameters of the cavities formed along the optical path. In practice, the changes the surface at the boundary of the cavity established between the face 6 and the opposite end of the measuring element 5 is useful in measurements. The best results are obtained if the optical path contains only one cavity. Each connection, and each border of medias introduces an additional cavity. In the construction of the interferometer according to the invention, the number of cavities is limited. The residual cavity 7 is negligible due to its small size. Additionally, its contribution to the measurement result is limited thanks to oblique cut of the fiber section 4 and providing an adequate ratio of reflection coefficients at the boundaries of the cavity:

$$\frac{R_1}{R_2} \leq 0.5$$

Where:

- $R_1$ is the reflection factor from the end of the optical fiber,
- $R_2$ is the reflection coefficient from the surface of the measuring element facing the capillary.

The difference between the refractive indices $n_1$ of the medium in the capillary and $n_2$ of the material of the measuring element is greater than 30%, i.e. $\frac{|n_2 - n_1|}{n_1} \geq 0{,}3$ , which allows for better dynamics of measurement.

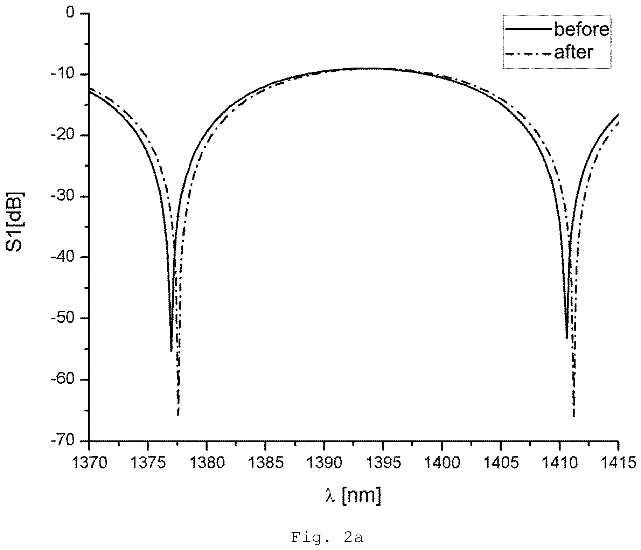

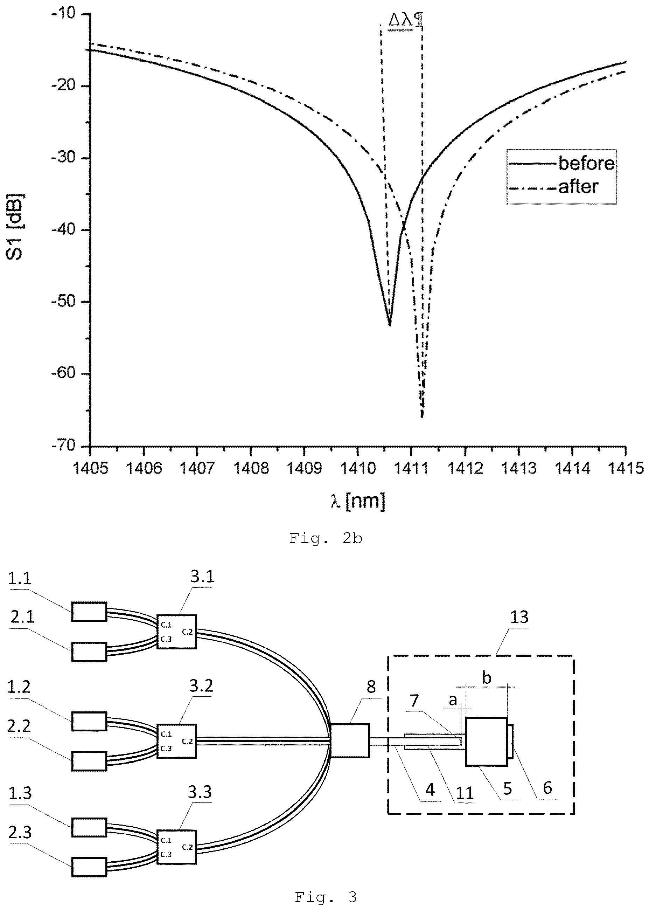

The measuring element 5 is a tile in the form of a glass cylinder with a height of 20 $\mu$m. The face 6 of the measuring element 5 is coated with a perfluorinated polymer with a refractive index of approximately 1.33. Coating is provided by immersing measuring element 5 in a polymer solution. As a result of exposing the face 6 to detected substances - refrigerants, which are compounds of carbon, chlorine and fluorine, like 1,1,2-trichloro-1,2,2-trifluoroethane the layer of polymer swells. In this configuration swelling contributes to a change of the substance thickness by 10 nm, which corresponds to shift of interference fringes in a proximity of 1410 nm by 0.6 nm - as shown in Fig. 2a and Fig. 2b, showing reflection coefficient S11 as a function of wavelength before and after exposure of the measuring element to refrigerants.

Based on the obtained spectral plots shown in Fig. 2a and Fig. 2b, the thickness of the layer covering the face 6 and changing its thickness is determined.

The first step is to measure the thickness of the measuring element 5 by determining the difference in wavelength for neighboring interference fringes during the measurement before exposure to the measuring substance. These fringes are shown in Fig. 2a. Thus, the calibration of the interferometer is carried out by determining the difference of optical paths in the interferometer and considering the refractive index for the cavity formed by the surfaces of the measuring element 5 and taking into account that the optical signal passes through the cavity twice.

Next, the face 6 is exposed to the measured substance and one of the interference fringes is analyzed; a difference in wavelength corresponding to the fringes before and after exposure is determined. Fig. 2b shows the fringes before and after exposure. Shift of the fringes occurred due to a change in the thickness of the layer which had been attached to the face 6 of the measuring element 5.

After determining the difference of the wavelength corresponding to said interference fringe before and after exposure, knowing the refractive index of the layer covering the face 6 of the measuring element 5, a change in the layer thickness $\Delta L$ is calculated:

$$\Delta L = \frac{(L_2\, n_2 + L_3\, n_3)}{n_2} \left( \frac{\lambda + \Delta\lambda}{\lambda} - 1 \right)$$

Where:

$L_2$, $n_2$ denote the thickness and refractive index of the measuring element 5, respectively,
$L_3$ , $n_3$ denote the thickness and refractive index of the layer of perfluorinated polymer covering the face 6 of the measuring element 5, respectively,
$\lambda$ is wavelength of analysed fringe before and after swelling of the layer,
$\Delta\lambda$ - is the difference in wavelength for the analyzed interference fringe before and after the layer swelling.

If the change in wavelength $\Delta\lambda$ of the interference fringe is in a range (0.1 nm, 16.8 nm) towards longer wavelengths, detection of the refrigerant is acknowledged. The range was selected experimentally. In other embodiments of the invention, other ranges and other active substances are suitable for selection to detect other substances. Selection can be done in routine tests. The skilled person is able to easily offer other active substances and measure appropriate ranges.

In the present embodiment, the configuration of the measuring probe 13 according to the invention makes it possible to effectively shorten the residual optical cavity 7. The probe 13 is shown schematically in Fig. 1b. The end of optical fiber 4 and measuring element 5 are placed in a glass capillary having a U-section in the cross-section. The fiber end 4 is cut at an angle of 20° and press to the measuring element 5. The capillary is sealed by welding at both ends on measuring element 5 and optical fiber 4. Connecting point capillary 11 with optical fiber 4 should be moved away from the residual optical cavity 7 to prevent accidental increase of the reflection of one of the layers. This was achieved using a 5 mm long capillary 11.

## Example 2

An interferometer according to the second embodiment of the invention was made according to the same block diagram illustrated in Fig. 1a. The light source 1 is a narrowband tunable light source with a central wavelength of 1550 nm tunable in a range of 50 nm. The source 1 is connected to the first port C.1 of circulator via single-mode fiber. A measuring probe 13 is connected to the second port C.2 of the circulator.

A measuring probe according to this embodiment of the invention is shown schematically in Fig. 1c. It is interconnected into the optical path of the interferometer with an end of the single-mode optical fiber 4 provided with a connector which is not shown in the figure. The other end of the optical fiber 4 is enclosed in the capillary 11 and pushed against the measuring element 5. The end of the optical fiber 4 housed in the capillary is cut at an angle of 8°. A weld is made between the capillary 11 and the measuring element 5. As a result, between the end of the optical fiber 4 and the measuring element 5, there is an air gap forming a residual cavity 7 with an effective width $a = 2$ $\mu$m. The measuring element 5 has a length of $b = 20$ $\mu$m. The face 6 of the measuring element 5 is covered with the same substance as in example 1.

Detector 2 is connected to the third port C.3 of the circulator.

## Example 3

Block diagram of an interferometer according to the third embodiment of the invention is the same as in the first and the second embodiment. It is shown in Fig. 1a. The light source 1 being a halogen lamp emitting light in a wavelength range from the 400-700 $\mu$m, is connected through a birefringent optical fiber - maintaining polarization, and a single mode in the operational wavelength band of the source 1 - to the first port C.1 of a circulator. Circulator maintaining polarization has a function of dividing element 3. The second port C.2 of the circulator is connected with measuring probe (13). Optical fiber segment 4 of the optical probe 13 is birefringent and has a beat length of 3 mm at wavelength $\lambda = 550$ nm. It maintains polarization and is single mode in the wavelength operational band of the source 1. Measuring element (5) is made of lead glass having a refractive index equal to 1.8. Third port C.3 of the circulator is connected to spectroscope constituting the detector 2.

Alternatively, measuring element 5 can be made of other substances selected from a group including glass, silica glass, lead glass, ZBLAN glass and polymers, which also provide relatively low losses.

Silica glass is particularly convenient in processing. Using silica glass, it is convenient to manufacture cylindrical measuring element 5 having desired length and smooth surface as well as bases parallel to each other and perpendicular to the axis.

Adhesion of the substance to be detected to the face 6 of the measuring element 5 is obtained by placing face 6 in the piranha solution, that is a solution comprising concentrated sulfuric acid and 30% hydrogen peroxide mixed in volume proportion of 3:1. Thusly processed face 6 is active enough to attract and be covered with a layer of polymer having a refractive index of 1.5 and 2 nm thick when exposed to poly(allylamine hydrochloride).

Surface of the lead glass has chemical bonds O-Si-O-Si-O. After exposure to the piranha solution structures Si-O-Si are transformed to 2x Si-OH which have more polar character and consequently attachment of ion polymers to the surface is easier.

Layer of 2 nm of substance having refractive index of 1.5 to the face 6 of the measuring element 5 results in shift of spectral refractive fringes by 5 pm at wavelength of 550 nm. Consequently the sensor in this embodiment is applicable for detection of poly(allylamine hydrochloride), presence of which is acknowledged when spectral interference fringes are shifted by a value between 2 pm and 0,2 nm towards longer wavelengths.

## Example 4

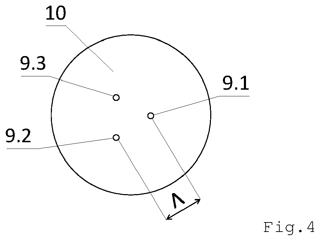

In Fig. 3 there is shown a block diagram of a fourth embodiment of the invention. Use of measuring probe 9 with a multi-core section of the fiber 4 makes it possible to simultaneously observe the spectrum for different wavelengths of the light source. In the present example, a three-core optical fiber is shown schematically in cross-section in Fig. 4 and a set of three light sources.

In the set of light sources (1.1, 1.2, 1.3), three wide-spectral superluminescent diodes with wavelengths of 1310 nm, 1450 nm and 1550 nm, respectively, and 50 nm full width were used. Each of the sources is connected to the detector 2.1, 2.2, 2.3 connected to it via the circulator 3.1, 3.2, 3.3 in the configuration of the reflection measurement. As the detectors 2.1, 2.2, 2.3, a spectrometer was used. The free ports of circulators 3.1, 3.2, 3.3 are connected to the ports of the Fan-In/Fan-out device 8 connecting these ports to the cores of the three-core section of optical fiber 4 of the measuring probe 9.

The measuring element 5 has a length $b = 50$ $\mu$m and is made of glass ZBLAN ($ZrF_4$-$BaF_2$-$LaF_3$-$AlF_3$-NaF). Between the ZBLAN glass and the input multi-core fiber 4 there is an air gap - residual cavity 7 with length $a = 1$ $\mu$m. In this configuration, a Fabry-Perot resonator is formed for each of the cores 9.1, 9.2, 9.3.

The face 6 of the measuring element 5 is sensitized to the detection of acetone as a result of immersion in a 1% solution of polystyrene in dichloromethane. The active layer remaining on the face 6 after drying has certain property: it swells as a result of contact with acetone. Consequently, a sensor according to the invention equipped with such a layer can be used as an acetone sensor.

The skilled person is able to easily offer other sets of sources with other mid-wavelengths and other spectral widths that allow measurements in the range from 1300 to 1500 nm, in which the sensor of the invention has been able to detect and measure the desired substances.

Light from sources through single-mode optical fibers is directed to circulators 3 and then to a fan-in/fan-out device 8 to the input three-core fiber 4. This optical fiber has a cross-section of the triangular set out of the cores 9.1, 9.2, 9.3 shown in Fig. 3, and the lattice constant $\Lambda = 80$ $\mu$m. Cores 9.1, 9.2, 9.3 have diameters of 8.2 $\mu$m and numerical apertures of 0.12. From the optical fiber 4 the light is directed to the air filed residual cavity 7 and the measuring element 5. Light reflected from the edge of the measuring element, returns via a fiber segment 4, through a fan-in/fan-out element, through single-mode optical fibers and circulators to detectors on which the fringes resulting from interference of light reflected from opposite ends of measuring element 5 are observed. The immersion in acetone at room temperature causes a change in the thickness of the layer on the measuring probe by approx. 200 nm and causes the fringes shift in the vicinity of the 1550 nm wavelength by approx. 6.4 nm, adjacent to the wavelength of 1450 nm at 6 nm, in the vicinity of the wavelength of 1310 nm by about 5.4 nm. It is acknowledged that acetone was detected if the interference fringe shift obtained at all source wavelengths lies within the range of 0.1 nm to 8.0 nm. Thus, an increase in the specificity of the detection method has been achieved.

Use of a fan-in/fan-out element makes it possible to observe shifts of all of these fringes simultaneously. Improvement of the sensor's operation - higher sensitivity and specificity - is obtained already when observing two fringes. For some of the substances detected, it is advisable to use a fiber with more than three cores and a correspondingly greater number of light sources - up to ten, 12 or more.

In embodiments of the sensor according to the invention, multi-core fiber sections 4 having a greater number of cores and a corresponding number of light sources and detectors can be used. Such sensor systems and measuring probes are more complicated but they give the possibility to identify the detected substance with more certainty.

In some embodiments of the invention, a fiber optic section may be used as the measuring element 5. Due to the use of the optical fiber segment as a measuring element 5, the diffraction of beam is avoided - due to the presence of the core in the optical fiber. The use of optical fiber with a positive dispersion in the light source's bandwidths avoids the occurrence of non-linear phenomena.

The person skilled in the art is able to routinely propose other advantageous modifications of the optical path between source and detector in some circumstances, without however departing from the invention as defined by the claims. For example, circulators used in the embodiments above can be easily replaced with couplers.

Similarly, one skilled in the art familiarized with the description above is able to propose without difficulty various methods for coating or sensitizing the face 6 of the measuring element 5 to various detected substances and also to select appropriate optical parameters of the source and optical path. Sensitivity to hydrochloric acid can be obtained by preparing a measuring element made of silica glass with a small porosity and refractive index of approx. 1.8 and covering its face with yttrium oxide, e.g., by laser warming of yttrium oxide and depositing on glass. Contact of a dissected element with hydrochloric acid causes the fringes shift at a wavelength of 1550 nm by approx. 4 nm.

The person skilled in the art is also able to propose various techniques for connecting the end of optical fiber 4 of measuring probe 13 to the optical path, which are not in accordance with the present invention, in particular by splicing the fibers and with dedicated fiber optic connector.

The person skilled in the art can easily select the length of the measuring element to the light source band and replace the sources mentioned in the description with various substitutes. The creators have also successfully used various sources, including:

- Supercontinuum source
- Halogen lamp emitting light from the range of 400-700 nm,
- Superluminescent diode with central wavelength on 1310 nm,
- Superluminescent diode with central wavelength on 1400 nm,
- Superluminescent diode with central wavelength on 1450 nm,
- Superluminescent diode with central wavelength on 1550 nm,
- Narrowband tuned source with central wavelength from range 1310-1550 nm and range of tuning at least 20 nm.

The invention may be embodied using various measuring techniques known to those skilled in the art. Broadband light sources such as SLED diodes, supercontinuum sources, or halogen can be used, and as a detector, a spectrum analyzer or spectrometer. Alternatively, one tunable source can be used, switched during the measurement to the next wavelength. In this configuration, more primitive detectors can be used. There is possibility of analyzing one broadband light signal with several detectors or several sources of narrowband light sources to analyze with one broadband detector.

Embodiments should be read as illustrating the invention but not limiting.

**Claims**

1. Fiber optic measuring probe for detecting a chemical substance comprising an optical fiber segment (4), with a measuring element (5) constituting a resonant cavity, having a face (6) adapted to come into contact with the chemical substance to be detected, wherein the optical fiber segment (4) is at least along part of its length contained within a capillary (11), and a first ending part of the capillary (11) is joined with the measuring element (5) while another portion of the capillary (11) is clenched on the optical fiber segment (4),

**characterized in that**

the capillary (11) has a length of at least 5 mm, the optical fiber segment (4) and the measuring element (5) are squeezed together so that there is only a residual cavity (7) between them, and a reflection coefficient $R_1$ from a first surface of the optical fiber segment (4) confining the residual cavity (7) from a first side and a reflection coefficient $R_2$ from a second surface of the measuring element (5) confining the residual cavity (7) from an opposite side meet the condition $\dfrac{R_1}{R_2} \leq 0.5$.

2. Fiber optic measuring probe according to claim 1, **characterized in that** the measuring element (5) has the face (6) at least partly covered with a substance adhesive to the chemical substance to be detected.

3. Fiber optic measuring probe according to claim 1, **characterized in that** the measuring element (5) has the face (6) at least partly covered with a substance that changes its optical parameters when exposed to the chemical substance to be detected.

4. Fiber optic measuring probe according to claim 1, **characterized in that** the measuring element (5) has the face (6) at least partly covered with a substance that loses its adhesiveness when exposed to the substance to be detected.

5. Fiber optic measuring probe according to claim 1, **characterized in that** the measuring element (5) is a tile made of material comprising a substance selected from a group including glass, silica glass, lead glass, ZBLAN glass and polymers.

6. Fiber optic measuring probe according to claim 1, **characterized in that** an end of the optical fiber segment (4) inside the capillary (11) is oblique and inclined by an angle within a range of 4° to 20° with respect to the axis of the optical fiber segment (4).

7. Fiber optic measuring probe according to claim 1, **characterized in that** it has a connector provided on an end of the optical fiber segment (4), opposite to the measuring element (5).

8. Fiber optic measuring probe according to claim 1, **characterized in that** the optical fiber segment (4) has more than one core (9.1, 9.2, 9.3).

9. Interferometric fiber optic sensor for detecting a chemical substance comprising a light source (1, 1.1, 1.2, 1.3), a detector (2, 2.1, 2.2, 2.3) and an optical path arranged between the light source (1, 1.1, 1.2, 1.3) and the detector (2, 2.1, 2.2, 2.3), further comprising a light dividing element (3, 3.1, 3.2, 3.3) to which the detector (2, 2.1, 2.2, 2.3) and the light source (1, 1.1, 1.2 1.3) are connected, as well as a fiber optic measuring probe (13) being a part of the optical path, **characterized in that** the fiber optic measuring probe (13) is the fiber optic measuring probe as defined in any of the claims 1 to 8.

10. Interferometric fiber optic sensor according to claim 9, **characterized in that** the optical fiber segment (4) of the fiber optic measuring probe (13) is a multicore fiber segment and is connected to a fan-in/fan-out device (8) being part of the optical path, wherein an interferometer has a first (1.1) light source and a first (2.1) detector connected with the fan-in/fan-out device (8) via a first light dividing element (3.1) and a second (1.2) light source and a second (2.2) detector connected with the fan-in/fan-out device (8) via a second light dividing element (3.2).

11. Method of detecting a chemical substance using an interferometric fiber optic sensor equipped with an optical path with a detector (2, 2.1, 2.2, 2.3), a light source (1, 1.1, 1.2, 1.3) and a fiber optic measuring probe (13) included in the optical path, leading light to the chemical substance to be detected, in which the substance is considered as detected if a shift of a predefined interference fringe is observed on the detector (2, 2.1, 2.2, 2.3), **characterized in that** the interferometric fiber optic sensor is the interferometric fiber optic sensor as defined in any of claims 9 or 10 that has the fiber optic measuring probe (13) as defined in any of claims 1 to 8.

**Patentansprüche**

1. Faseroptische Messsonde zur Detektion einer chemischen Substanz, die ein optisches Fasersegment (4) umfasst mit einem Messelement (5), das einen Resonanzhohlraum aufweist, mit einer Fläche (6), die für den Kontakt mit der chemischen Substanz, die erkannt werden soll, vorgesehen ist, wobei sich das optische Fasersegment (4) mindestens entlang eines Teils seiner Länge in einer Kapillare (11) befindet, und ein erster Endteil der Kapillare (11) mit dem Messelement (5) verbunden ist, während ein anderer Teil der Kapillare (11) an das optische Fasersegment (4) geklemmt ist,

**dadurch gekennzeichnet, dass**

die Kapillare (11) eine Länge von mindestens 5 mm hat,

das optische Fasersegment (4) und das Messelement (5) zusammengepresst sind, sodass nur ein Resthohlraum (7) zwischen ihnen vorhanden ist,

dass ein Reflexionskoeffizient R1 von einer ersten Oberfläche des optischen Fasersegments (4), das den Resthohlraum (7) von der ersten Seite begrenzt, und ein Reflexionskoeffizient R2 von einer zweiten Oberfläche eines Messelements (5), das den Resthohlraum (7) von der gegenüberliegenden Seite begrenzt, die Bedingung $\frac{R_1}{R_2} \leq 0{,}5$ erfüllen.

2. Faseroptische Messsonde nach Anspruch 1, **dadurch gekennzeichnet, dass** das Messelement (5) eine Fläche (6) aufweist, die mindestens teilweise mit einer Substanz bedeckt ist, die an die chemische Substanz bindet, die detektiert werden soll.

3. Faseroptische Messsonde nach Anspruch 1, **dadurch gekennzeichnet, dass** das Messelement (5) eine Fläche (6) aufweist, die mindestens teilweise mit einer Substanz bedeckt ist, die ihre optischen Parameter ändert, wenn sie mit der chemischen Substanz, die detektiert werden soll, in Kontakt kommt.

4. Faseroptische Messsonde nach Anspruch 1, **dadurch gekennzeichnet, dass** das Messelement (5) eine Fläche (6) aufweist, die mindestens teilweise mit einer Substanz bedeckt ist, die ihre Bindungsfähigkeit verliert, wenn sie mit der Substanz, die detektiert werden soll, in Kontakt kommt.

5. Faseroptische Messsonde nach Anspruch 1, **dadurch gekennzeichnet, dass** das Messelement (5) eine Kachel aus einem Material ist, das eine Substanz enthält, die aus einer Gruppe ausgewählt ist, die Glas, Quarzglas, Bleiglas, ZBLAN-Glas und Polymere umfasst.

6. Faseroptische Messsonde nach Anspruch 1, **dadurch gekennzeichnet, dass** ein Ende des optischen Fasersegments (4) innerhalb der Kapillare (11) schräg und geneigt in einem Winkel von 4° bis 20° in Bezug auf die Achse des optischen Fasersegments (4) geneigt ist.

7. Faseroptische Messsonde nach Anspruch 1, **dadurch gekennzeichnet, dass** sie einen Anschluss an einem Ende des optischen Fasersegments (4) hat, der gegenüber zu Messelement (5) liegt.

8. Faseroptische Messsonde nach Anspruch 1, **dadurch gekennzeichnet, dass** das optische Fasersegment (4) mehr als einen Kern (9.1, 9.2, 9.3) hat.

9. Interferometrischer faseroptischer Sensor zur Detektion einer chemischen Substanz mit einer Lichtquelle (1, 1.1, 1.2, 1.3), einem Detektor (2, 2.1, 2.2, 2.3) und einem zwischen der Lichtquelle (1, 1.1, 1.2, 1.3) und dem Detektor (2, 2.1, 2.2, 2.3) angeordneten Lichtweg,

des Weiteren mit einem Lichtteilerelement (3, 3.1, 3.2, 3.3), das mit dem Detektor (2, 2.1, 2.2, 2.3) und der Lichtquelle (1, 1.1, 1.2 1.3) verbunden ist, sowie mit einer faseroptischen Messsonde (13), die Teil des Lichtwegs ist,
**dadurch gekennzeichnet, dass** die faseroptische Messsonde (13) die faseroptische Messsonde ist, die in den Ansprüchen 1 bis 8 definiert ist.

10. Interferometrischer faseroptischer Sensor nach Anspruch 9, **dadurch gekennzeichnet, dass** das optische Fasersegment (4) der faseroptischen Messsonde (13) ein optische Fasersegment mit mehreren Kernen ist und mit einer Fan-in/Fan-out-Vorrichtung (8) verbunden ist, die Teil des Lichtwegs ist, wobei ein Interferometer eine erste (1.1) Lichtquelle und einen ersten Detektor (2.1) hat, die über ein erstes Lichtteilerelement (3.1) mit der Fan-in/Fan-out-Vorrichtung (8) verbunden sind, und eine zweite (1.2) Lichtquelle und einen zweiten Detektor (2.2), die über ein zweites Lichtteilerelement (3.2) mit der Fan-in/Fan-out-Vorrichtung (8) verbunden sind.

11. Verfahren zur Detektion einer chemischen Substanz mithilfe eines interferometrischen faseroptischen Sensors, der über einen Detektor (2, 2.1, 2.2, 2.3), eine Lichtquelle (1, 1.1, 1.2, 1.3) und eine faseroptische Messsonde (13) verfügt, die sich im Lichtweg befindet, der Licht zu der optischen Substanz, die detektiert werden soll, führt, wobei die Substanz als detektiert erachtet wird, wenn eine Verschiebung der vordefinierten Interferenzrandzone auf dem Detektor (2, 2.1, 2.2, 2.3) beobachtet wird, **dadurch gekennzeichnet, dass** der interferometrische faseroptische Sensor der in den Ansprüchen 9 oder 10 definierte interferometrische faseroptische Sensor ist, der die in den Ansprüchen 1 bis 8 definierte faseroptische Messsonde (13) aufweist.

**Revendications**

1. Sonde de mesure à fibre optique pour détecter une substance chimique

comprenant un segment de fibre optique (4), avec un élément de mesure (5) constituant une cavité résonnante, ayant une face (6) adaptée pour venir en contact avec la substance chimique à détecter, dans laquelle le segment de fibre optique (4) est au moins le long d'une partie de sa longueur contenu à l'intérieur d'un capillaire (11), et une première partie terminale du capillaire (11)

est jointe à l'élément de mesure (5) tandis qu'une autre partie du capillaire (11) est serrée sur le segment de fibre optique (4),
**caractérisée en ce que**

le capillaire (11) présente une longueur d'au moins 5 mm,

le segment de fibre optique (4) et l'élément de mesure (5) sont serrés ensemble de sorte qu'il n'y a qu'une cavité résiduelle (7) entre eux, et

un coefficient de réflexion $R_1$ d'une première surface du segment de fibre optique (4) confinant la cavité résiduelle (7) à partir du premier côté et un coefficient de réflexion $R_2$ d'une seconde surface d'un élément de mesure (5) confinant la cavité résiduelle (7) à partir du côté opposé satisfont à la condition

$$\frac{R_1}{R_2} \leq 0{,}5$$

.

2. Sonde de mesure à fibre optique selon la revendication 1, **caractérisée en ce que** l'élément de mesure (5) a la face (6) au moins partiellement recouverte d'une substance adhésive à la substance chimique à détecter.

3. Sonde de mesure à fibre optique selon la revendication 1, **caractérisée en ce que** l'élément de mesure (5) a la face (6) au moins partiellement recouverte d'une substance qui change ses paramètres optiques quand elle est exposée à la substance chimique à détecter.

4. Sonde de mesure à fibre optique selon la revendication 1, **caractérisée en ce que** l'élément de mesure (5) a la face (6) au moins partiellement recouverte d'une substance qui perd son adhésivité quand elle est exposée à la substance à détecter.

5. Sonde de mesure à fibre optique selon la revendication 1, **caractérisée en ce que** l'élément de mesure (5) est un carreau fait d'un matériau comprenant une substance sélectionnée dans un groupe incluant un verre, un verre de silice, un verre de plomb, un verre ZBLAN et les polymères.

6. Sonde de mesure à fibre optique selon la revendication 1, **caractérisée en ce qu'**une extrémité du segment de fibre optique (4) à l'intérieur du capillaire (11) est oblique et inclinée d'un angle dans une plage de 4° à 20° par rapport à l'axe du segment de fibre optique (4).

7. Sonde de mesure à fibre optique selon la revendication 1, **caractérisée en ce qu'**elle comporte un connecteur fourni sur une extrémité du segment de fibre optique (4), opposée à l'élément de mesure (5).

8. Sonde de mesure à fibre optique selon la revendication 1, **caractérisée en ce que** le segment de fibre optique (4) possède plus d'une âme (9.1, 9.2, 9.3).

9. Capteur interférométrique à fibre optique pour détecter une substance chimique comprenant une source de lumière (1, 1.1, 1.2, 1.3), un détecteur (2, 2.1, 2.2, 2.3) et un trajet optique agencé entre la source de lumière (1, 1.1, 1.2, 1.3) et le détecteur (2, 2.1, 2.2, 2.3),

comprenant en outre un élément de division de lumière (3, 3.1, 3.2, 3.3) auquel le détecteur (2, 2.1, 2.2, 2.3) et la source de lumière (1, 1.1, 1.2 1.3) sont connectés, ainsi qu'une sonde de mesure à fibre optique (13) faisant partie du trajet optique,
**caractérisé en ce que** la sonde de mesure à fibre optique (13) est la sonde de mesure à fibre optique telle que définie dans l'une quelconque des revendications 1 à 8

10. Capteur interférométrique à fibre optique selon la revendication 9, **caractérisé en ce que** le segment de fibre optique (4) de la sonde de mesure à fibre optique (13) est un segment de fibre multicoreet est connecté à un dispositif d'entrance/sortance (8) faisant partie

du trajet optique, dans lequel un interféromètre comporte une première (1.1) source de lumière et un premier (2.1) détecteur connectés au dispositif d'entrance/sortance (8) via un premier élément de division de lumière (3.1) et une seconde (1.2) source de lumière et un second (2.2) détecteur connectés au dispositif d'entrance/sortance (8) via un second élément de division de lumière (3.2).

11. Procédé de détection d'une substance chimique faisant appel à un capteur interférométrique à fibre optique équipé d'un trajet optique avec un détecteur (2, 2.1, 2.2, 2.3), une source de lumière (1, 1.1, 1.2, 1.3) et une sonde de mesure à fibre optique (13) incluse dans le trajet optique, conduisant une lumière vers la substance chimique à détecter, dans lequel la substance est considérée comme détectée si un décalage d'une frange d'interférence prédéfinie est observé sur le détecteur (2, 2.1, 2.2, 2.3), caractérisé en que le capteur interférométrique à fibre optique est le capteur interférométrique à fibre optique tel que défini dans l'une quelconque des revendications 9 ou 10 qui comporte la sonde de mesure à fibre optique (13) telle que définie dans l'une quelconque des revendications 1 à 8.

Fig. 1a

Fig. 1b

Fig. 1c

Fig. 2a

Fig. 2b

Fig. 3

10

9.3

9.1

9.2

Λ

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018106134 A
- EP 3054272 A
- US 2005254062 A
- WO 2013139783 A